# EUROPEAN PATENT SPECIFICATION

(11) **EP 0 625 965 B1**
(45) Date of publication and mention of the grant of the patent: **18.09.1996**
(21) Application number: 93904894.8
(22) Date of filing: 05.02.1993
(51) Int. Cl.: C04B 35/58, C04B 35/581, C04B 41/85

(54) **PROCESS OF PREPARING AN ACQUEOUS SLIP CONTAINING A MOISTURE-RESISTANT ALUMINUM NITRIDE POWDER**
Verfahren zur Herstellung eines wässerigen schlickers enthaltend ein feuchtigkeitsbeständiges Aluminiumnitridpulver
PROCEDE DE PREPARATION D'UNE SUSPENSION AQUEUSE CONTENANT DE PUDRE DE NITRURE D'ALUMINIUM RESISTANTE A L'HUMIDITE

(30) Priority: 14.02.1992 US 837293
(43) Date of publication of application: 30.11.1994
(73) Proprietor: THE DOW CHEMICAL COMPANY, Midland, Michigan 48640 (US)
(72) Inventor: KNUDSEN, Arne, K., Midland, MI 48642 (US); GUITON, Theresa, A., Midland, MI 48642 (US); BEECROFT, Laura, L., Beavercreek, OH 45385 (US)
(74) Representative: Burford, Anthony Frederick
(86) International application number: PCT/US93/01002
(87) International publication number: WO 93/16016

(56) References cited:
- EP-A- 0 266 641
- US-A- 4 814 302
- Patent Abstracts of Japan, Vol 13, No 372, C-627, abstract of JP, 01-126276 (INAX CORP), 18.05.89

## Description

### Technical Field

This invention relates generally to treated aluminum nitride powder, a method of treating aluminum nitride powder, and methods of using such powder.

### Background of the Invention

Ceramic materials are used today in many applications which cail for durable, tough, and heat-resistant materials. In making ceramic articles, a ceramic composite powder is often made by first wet mixing ceramic powder, such as aluminum nitride (AIN), ceramic composite components, such as binders, lubricants, sintering aids, and other processing aids in a solvent.

Traditionally, when AIN powder is used as the ceramic powder, wet mixing is performed using alcohol or some other non-aqueous liquid as a solvent to aid in mixing. Water is generally not a suitable solvent for wet mixing with AIN powder because AIN is highly sensitive to hydrolysis. Hydrolysis liberates ammonia as a byproduct.

Due to environmental concerns, water would be an ideal solvent for wet mixing AlN powder. If water were to be used as the solvent, no precautions would need to be taken to avoid exposure to the solvent during wet mixing operations. Additionally, containing the solvent and taking precautions to avoid the dangers of flammable liquids during and after mixing would not be necessary with water.

WO-A-9006906 discloses a method of preparing an inorganic nitride or carbide particle having deposited thereon a substantially uniform surface layer coating of a metal hydroxide or metal oxide. The method includes (i) placing nitride or carbide particles into a solution comprising water and a surfactant that reacts with the nitride or carbide particles at a faster rate than the water, (ii) adding thereto an aqueous solution containing ions of a metal that will form the metal hydroxide or oxide, and (iii) increasing the pH of the solution of the metal and the nitride or carbide particles to deposit the metal hydroxide on the surface of the nitride or carbide particles. The nitride may be AIN and the metal hydroxide or oxide may be generated from salts such as yttrium nitrate.

The method disclosed in WO-A-9006906 is not ideal for several reasons. First, it uses an amount of metal compound greater than that found necessary by the present invention. Second, it uses water or predominantly water as the solvent during the treatment step. Water may not be preferred due to the possibility of hydrolysis of the AIN powder. Third, the method uses a surfactant to coat the AIN powders. This may leave an undesired impurity in the ceramic. Some of the surfactants mentioned consist of zirconium and aluminum compounds. The addition of zirconium and aluminum oxides to AIN powders is known to negatively affect the thermal conductivity of parts sintered from the powders.

### Disclosure of the Invention

A first aspect of the invention is a process of preparing a aqueous slip containing moisture-resistant aluminum nitride powder, comprising: (a) thoroughly mixing a slurry containing AIN powder, an yttrium-containing compound, and a soivent for the yttrium-containing compound in the absence of any surfactant; (b) removing the solvent from the slurry to form dry, moisture-resistant AIN powder uniformly coated with the yttrium-containing compound; and (c) dispersing the dry, moisture-resistant AIN powder and ceramic composite components in an aqueous medium, wherein the aqueous medium is employed in an amount of from 20 to 80 weight percent and the dry moisture-resistant AIN powder and the ceramic composite components are employed in a combined amount of from 20 to 80 weight percent, both percentages being based upon combined weights of the aqueous medium, the AIN powder and the ceramic composite components and totalling 100 percent. The yttrium-containing compound preferably is present in an amount from 0.1 to 10 weight percent, calculated as yttrium oxide, of the AIN.

The aqueous slip prepared in accordance with the first aspect may be used to make ceramic articles. The slip is suitably converted to ceramic greenware and sintered using conventional procedures.

### Detailed Description of the Invention

The yttrium-containing compound is desirably present in an amount within a range of from 0.1 to 10 weight percent (wt-%), calculated as yttrium oxide (Y₂O₃), of the AIN. The range is preferably from 0.1 to 0.4 wt-%, calculated as Y₂O₃, based upon weight of the AIN powder. It is believed that a substantial amount of the yttrium-containing compound coats the AIN powder. The yttrium-containing compound may be yttrium nitrate, yttrium sulfate, yttrium carbonate, yttrium alkoxides such as yttrium ethoxide and yttrium isopropoxide, and mixtures thereof. The yttrium-containing compounds in the coating may subsequently be converted to Y₂O₃.

The yttrium-containing compound is coated onto AIN powder by a two step process. Step one includes thoroughly mixing a slurry containing AIN powder, an yttrium-containing compound, and a solvent for the yttrium-containing compound in the absence of any surfactant The yttrium-containing compounds must be substantially soluble in the solvent. The slurry is beneficially free of other additives such as binders, plasticizers and lubricants. Step two includes removing the solvent from the slurry to form the moisture-resistant AIN powder that is uniformly coated with the yttrium-containing compound.

The solvent is suitably a polar organic solvent or a mixture of such solvents. Suitable polar organic solvents include methanol, ethanol, and isopropanol. Non-aqueous solvents are usually preferred over aqueous solvents, as they offer less chance of hydrolyzing the AIN powder. The amount of solvent employed in the slurry is generally enough to facilitate mixing of the ingredients.

The solvent, the yttrium-containing compound, and the AIN powder may be mixed together in any order. The slurry is preferably blended until a uniform coating is achieved on external surfaces of the Al N powder.

Removing solvent from the slurry may be accomplished using conventional devices such as rotary evaporators, vacuum ovens, spray driers, or evaporating dishes. There is generally no need to grind or break up the dry treated powder. After the dry, moisture-resistant AIN powder is prepared, it may be dispersed in an aqueous medium to be milled with ceramic composite components, thereby forming a slip. It has been found that the dry, moisture-resistant AlN powders of this invention can be submerged and agitated in water for at least 46 hours, and sometimes up to 250 hours, before significant hydrolysis begins. Once significant hydrolysis begins, it tends to proceed at a slower rate than with untreated AIN powder.

Ceramic composite components may include binders, lubricants, sintering aids, dispersants, plasticizers, and other processing aids. Examples of binders include polyethylene glycols and polyethylene oxides. The binder may be added alone or in combination with a solvent. The binder is preferably employed in an amount sufficient to provide a greenware article formed from the composite powder with sufficient strength to retain its shape during normal handling and processing. This amount is typically from 1 to 20 wt-%, more typically from 2 to 10 wt-%, based on the weight of the AlN powder.

Suitable lubricants are oleic acid, stearic acid, and mineral oil. These lubricants may be employed in amounts ranging from 0.1 to 2 wt-% based on weight of the AIN powder.

Suitable sintering aids include calcium oxide, Y₂O₃, and other rare earth and alkaline earth metal oxides and halides. The sintering aids are typically employed in an amount of from 0.5 to 10 wt-%, based on weight of the AlN powder.

Suitable dispersants include menhaden fish oil and an ammonium polyelectrolyte sold under the name "DARVAN", a trademark of R.T. Vanderbilt Co., Norwalk, Connecticut. Dispersants are added in an amount sufficient to facilitate milling and aid in maintaining a high solids to liquid ratio. If a dispersant is employed, it is preferably in an amount of from 0.1 to 1 wt-%, based on weight of the AIN powder.

Illustrative plasticizers include propylene glycol, dipropylene glycol, tripropylene glycol and glycerin. If a plasticizer is employed, it is preferably in an amount of from 1 to 20 wt-%, and more preferably from 2 to 10 wt-%, based on weight of the AlN powder.

The slip has a "solids" content that is typically from 20 to 80 wt-%, more typically from 40 to 70 wt-%. "Solids" refer to the AlN powder and any ceramic composite components employed. Correspondingly, the aqueous medium is present in the slip in an amount of from 80 to 20 wt-%, more typically, from 30 to 60 wt-%. The amounts of solids and aqueous medium total 100%.

The process of milling the slip acts to mix the ingredients and reduce or eliminate agglomerates. Conventional milling methods include ball milling, sonication, and high shear mixing. Milling is generally carried out for a period of from 2 to 24 hours. The milled slip may be converted to a greenware article by conventional procedures such as tape casting, injection molding, slip casting, dry pressing, or cold isostatic pressing. The slip may be filtered prior to drying to remove agglomerates.

Once the slip has been cast, molded, or compacted into an article, the article is usually heated to remove or " burn out" organic components, such as the binder, lubricant, dispersant, plasticizer and any other organic processing aid. The burn out operation may be done in an inert gas (N₂, H₂/N₂, or Ar) atmosphere or in air. It is desirable to burn out the organic components at a temperature of from 380°C to 550°C.

After burning out the organic additives, the article is then generally sintered at temperatures of from 1600° to 1950°C. The sintering may be done in an inert atmosphere, such as nitrogen, or in a reducing atmosphere, such as hydrogen or a hydrogen-nitrogen mix.

This invention has an advantage in that the yttrium-containing compound, acting as a sintering aid, is very well dispersed in the composite powder, generally optimizing the effectiveness of the sintering aid. A well-distributed sintering aid may also provide improved microstructural uniformity which may, in turn, result in improved mechanical, thermal, and electrical properties as well as provide a uniform surface chemistry, facilitating subsequent metallization of the sintered ceramic.

The following examples are illustrative only and should not be construed as limiting the invention which is properly delineated in the appended claims.

### Example 1

8.5 g of Y(NO₃)₃x5H₂O were dissolved in 700 ml ethanol to form a solution. Then 500 g of an AIN powder having a surface area of 3.5m²/g were added slowly to the solution while vigorously mixing the solution to form a slurry. The amount of yttrium nitrate used relative to the amount of AIN powder resulted in yttrium being present at a level of 0.5 wt-%, calculated as Y₂O₃, of the AIN. After the slurry was mixed under high shear for approximately 1 hour, it was rotary evaporated under vacuum to dryness and further dried and calcined for 16 hours at 120°C in a vacuum oven to form a dry, moisture-resistant AIN powder.

The dry AIN powder was tested for resistance to hydrolysis by mixing the powder in water. Specifically, 8 g powder were mixed in 60 ml deionized water. The pH of the powder-water mixture was measured over time, while the mixture was continuously stirred. The pH rose from 6.5 to a stable pH of less than 7.2 that was maintained over 8 days, at which point an extremely gradual rise in pH was noted.

Comparatively, untreated AIN powder was tested for resistance to hydrolysis by mixing it in water as described with the treated powder. The pH of the powder-water mixture rose from 6.5 to over 10, and, within 24 hours, a violent boiling reaction between the powder and water occurred.

### Example 2

Using ethanol as the solvent, AIN powder was treated as described in Example 1 with yttrium ethoxide at a 0.5 wt-% level, calculated as Y₂O₃. The treated powders exhibited pH stability similar to that of Example 1.

### Example 3

Using ethanol as the solvent, AIN powder was treated as described in Example 1 with yttrium sulfate at a 0.5 wt-% level, calculated as Y₂O₃. The treated powders behaved in the same manner as the treated powders of Examples 1 and 2.

Examples 1-3 demonstrate the suitability of three different yttrium compounds. Similar results are expected with other yttrium compounds that are disclosed herein.

### Example 4

AIN powder was treated according to the invention with yttrium nitrate at a level of 0.5 wt-% calculated as Y₂O₃, using ethanol as the solvent. 92 g of the treated AIN powder were mixed with the 1 g propylene glycol, 3 g glycerin, 0.23 g of an ammonium polyelectrolyte sold under the name " DARVAN C", a trademark of R.T. Vanderbilt Co., Norwalk, Connecticut, 2.76 g Y₂O₃, and 60 ml deionized water. The mixture was ball milled in AIN media for 21 hours in a closed container 4g of methyl cellulose sold under the name "METHOCEL", a trademark of The Dow Chemical Company, Midland, Michigan, dispersed in approximately 80 ml water were added to the ball-milled mixture. About 25 ml water were added to the mixture to facilitate rinsing during transfer of the mixture from one container to another. The mixture was then hand stirred and centrifuged to remove bubbles. The mixture was tape cast to a 0.125 cm thickness and dried under forced air, The dried thickness was about 0.015 cm thick. The dried cast material was then exposed to a temperature of 500°C for one hour to burn out the organic components. The oxygen content of the resulting burned-out material was 2.88 wt-%. The burned-out material was then sintered at 1860°C for one hour. After sintering, the oxygen content was 2.5 wt-%.

This example demonstrates that treated AIN powder can successfully be processed in water-based formulations for many hours in a closed container.

While our invention has been described in terms of a specific embodiment, it will be appreciated that other embodiments could readily be adapted by one skilled in the art. Accordingly, the scope of our invention is to be limited only by the following claims.

## Claims

1. A process of preparing an aqueous slip containing moisture-resistant aluminum nitride powder, comprising:
(a) thoroughly mixing a slurry containing aluminum nitride powder, an yttrium-containing compound, and a solvent for the yttrium-containing compound in the absence of any surfactant,
(b) removing the solvent from the slurry to form dry, moisture-resistant aluminum nitride powder uniformly coated with the yttrium-containing compound, and
(c) dispersing the dry, moisture-resistant aluminum nitride powder and ceramic composite components in an aqueous medium wherein the aqueous medium is employed in an amount of from 20 to 80 weight percent and the dry, moisture-resistant aluminum nitride powder and the ceramic composite components are employed in a combined amount of from 20 to 80 weight percent, both percentages being based upon combined weight of the aqueous medium, the aluminum nitride powder and the ceramic composite components and totalling 100 percent.

2. A process as claimed in Claim 1, wherein the yttrium-containing compound is present in an amount of from 0.1 to 10 weight percent (calculated as yttrium oxide).

3. A process as claimed in Claim 2, wherein the yttrium-containing compound is present in an amount of from 0.1 to 0.4 weight percent (calculated as yttrium oxide).

4. A process as claimed in any one of the preceding claims, wherein the yttrium-containing compound is selected from yttrium nitrate, yttrium sulfate, yttrium carbonate, yttrium alkoxides, and mixtures thereof.

5. A process as claimed in any one of the preceding claims, wherein the solvent is selected from polar organic liquids and mixtures thereof.

6. A process as claimed in Claim 5, wherein the solvent is selected from methanol, ethanol and isopropanol.

7. The use of a dry coating of a yttrium-containing compound on aluminum nitride powder particles to improve the hydrolytic stability thereof.

8. A use as claimed in Claim 7, wherein said coating is applied by steps (a) and (b) of a process as defined any one of Claims 1 to 6.

## Patentansprüche

1. Verfahren zur Herstellung eines wässrigen Schlickers enthaltend Feuchtigkeits-beständiges Aluminiumnitrid Pulver, umfassend:
(a) gründliches Vermischen einer Aufschlämmung, enthaltend Aluminiumnitrid Pulver, eine Yttrium-enthaltende Verbindung und ein Lösungsmittel für die Yttrium-enthaltende Verbindung, in Abwesenheit einer oberflächenaktiven Substanz;
(b) Entfernen des Lösungsmittels aus der Aufschlämmung um ein trockenes, mit der Yttrium-enthaltenden Verbindung gleichmäßig beschichtetes, Feuchtigkeits-beständiges Aluminiumnitrid Pulver zu bilden, und
(c) Dispergieren des trockenen, Feuchtigkeits-beständigen Aluminiumnitrid Pulvers und von Kompositkeramikkomponenten in einem wässrigen Medium, wobei das wässrige Medium in einer Menge von 20 bis 80 Gew.-% verwendet wird und das trockene, Feuchtigkeitsbeständige Aluminiumnitrid Pulver und die Kompositkeramikkomponenten zusammengenommen in einer Menge von 20 bis 80 Gew.-% verwendet werden, wobei beide Prozentangaben auf das Gesamtgewicht des wässrigen Mediums, des Aluminiumnitrid Pulvers und der Kompositkeramikkomponenten bezogen sind und insgesamt 100 Prozent betragen.

2. Verfahren nach Anspruch 1, wobei die Yttrium-enthaltende Verbindung in einer Menge von 0,1 bis 10 Gew.-% (berechnet als Yttriumoxid) vorhanden ist.

3. Verfahren nach Anspruch 2, wobei die Yttrium-enthaltende Verbindung in einer Menge von 0,1 bis 0,4 Gew.-% (berechnet als Yttriumoxid) vorhanden ist.

4. Verfahren nach einem der vorhergehenden Ansprüche, wobei die Yttrium-enthaltende Verbindung ausgewählt wird aus Yttriumnitrat, Yttriumsulfat, Yttriumcarbonat, Yttriumalkoxiden und Gemischen davon.

5. Verfahren nach einem der vorhergehenden Ansprüche, wobei das Lösungsmittel ausgewählt wird aus polaren organischen Flüssigkeiten und Gemischen davon.

6. Verfahren nach Anspruch 5, wobei das Lösungsmittel ausgewählt wird aus Methanol, Ethanol und Isopropanol.

7. Verwendung einer trockenen Beschichtung einer Yttrium-enthaltenden Verbindung auf Aluminiumnitrid Pulverteilchen zur Verbesserung ihrer Hydrolysestabilität.

8. Verwendung nach Anspruch 7, wobei die Beschichtung durch die Schritte (a) und (b) eines Verfahrens nach einem der Ansprüche 1 bis 6 aufgebracht wird.

## Revendications

1. Procédé de préparation d'une barbotine aqueuse contenant de la poudre de nitrure d'aluminium résistant à l'humidité consistant:
(a) à mélanger minutieusement une suspension contenant de la poudre de nitrure d'aluminium, un composé contenant de l'yttrium, et un solvant pour le composé contenant de l'yttrium en absence de tout tensioactif,
(b) à éliminer le solvant de la suspension afin de former une poudre de nitrure d'aluminium sèche résistant à l'humidité revêtue de manière uniforme du composé contenant de l'yttrium, et
(c) à disperser la poudre de nitrure d'aluminium sèche, résistant à l'humidité et les composants de composite céramique dans un milieu aqueux dans lequel on emploie le milieu aqueux à raison de 20 à 80% en poids et on emploie la poudre de nitrure d'aluminium sèche résistant à l'humidité et les composants de composite céramique en une quantité combinée comprise entre 20 et 80% en poids, les deux pourcentages étant rapportés au poids combiné du milieu aqueux, de la poudre de nitrure d'aluminium et des composants de composite céramique s'élevant au total à 100%.

2. Procédé selon la revendication 1, dans lequel le composé contenant de l'yttrium est présent à raison de 0,1 à 10% en poids (calculé en oxyde d'yttrium).

3. Procédé selon la revendication 2, dans lequel le composé contenant de l'yttrium est présent à raison de 0,1 à 0,4% en poids (calculé en oxyde d'yttrium).

4. Procédé selon l'une des revendications précédentes dans lequel le composé contenant de l'yttrium est choisi parmi le nitrate d'yttrium, le sulfate d'yttrium, le carbonate d'yttrium, les alcoolates d'yttrium et leurs mélanges.

5. Procédé selon l'une des revendications précédentes dans lequel le solvant est choisi parmi les liquides organiques polaires et leurs mélanges.

6. Procédé selon la revendication 5, dans lequel le solvant est choisi parmi le méthanol, l'éthanol et l'isopropanol.

7. Utilisation d'un revêtement sec d'un composé contenant de l'yttrium sur des particules de poudre de nitrure d'aluminium afin d'améliorer leur stabilité à l'hydrolyse.

8. Utilisation selon la revendication 7, dans laquelle ledit revêtement est appliqué au moyen des étapes (a) et (b) d'un procédé tel que défini selon l'une des revendications 1 à 6.
